# EUROPEAN PATENT SPECIFICATION

(11) **EP 0 491 568 B1**
(45) Date of publication and mention of the grant of the patent: **06.03.1996**
(21) Application number: 91311777.6
(22) Date of filing: 18.12.1991
(51) Int. Cl.: B60R 11/02

(54) **Vehicle security device**
Sicherheitseinrichtung für Kraftfahrzeuge
Système de sécurité pour véhicule

(30) Priority: 18.12.1990 GB 9027329
(43) Date of publication of application: 24.06.1992
(73) Proprietor: Macleod, James, Port Glasgow, Inverclyde, PA14 6RR, Scotland (GB)
(72) Inventor: Macleod, James, Port Glasgow, Inverclyde, PA14 6RR, Scotland (GB)
(74) Representative: Jones, Andrée Zena

(56) References cited:
- DE-U- 8 808 662
- FR-A- 2 568 527
- FR-A- 2 620 667
- US-A- 4 065 946

## Description

The invention relates to an anti-theft device and method for use in vehicles to improve the security thereof as specified in the preamble of claim 1 and 5 and, for example, as disclosed in US-A-4 065 946.

It is becoming increasingly likely that a vehicle will be broken into by thieves with the sole intention of removing radio and other audio equipment, car telephone or television receivers from the vehicle. When this occurs, not only does the owner suffer the loss of the equipment but also a great deal of damage is done to the vehicle itself.

It is an object of the invention to provide an arrangement which minimises the likelihood of unauthorised removal of audio or audio-visual equipment from a vehicle fascia board.

The invention provides means to secure in place in a vehicle fascia board or the like, audio or audio-visual equipment comprising a housing enclosing components of said equipment, inextensible elongate connecting means adapted to be mounted at a first end thereof to a portion of said housing spaced from a front panel thereof designed to be visible in use, said connecting means being provided with mounting means to permit its second, opposite, end to be secured to a body portion chassis or bulkhead of a forwardly situated engine or boot compartment of the vehicle, characterised in that said connecting means is received over at least part of its length with a sleeve or tube of tough material adapted to withstand abrasion or other destructive action and in that the sleeve or tube is a loose fit around the connecting means.

Preferably the connecting means may be a cable in the form of a metal wire, for example of the kind referred to as piano wire, or may be a rod or struts or other form of linkage.

The invention further provides, in another aspect, a method of securing audio or audio-visual equipment in a recess of a vehicle fascia board or the like comprising the steps of procuring a length of inextensible connecting means, securing a first end of the cable to a portion of a housing of the equipment spaced from a front panel designed to be visible in use, passing the connecting means in a direction rearwardly of the equipment and securing the second, opposite, end of the connecting means to a body portion, chassis or bulkhead of the vehicle, said connecting means being received within a tough abrasion-resistant sleeve or tube prior to securing in place.

Conveniently, the second end of the connecting means may be mounted by means of a tying device or anchored by means of a threaded bolt and nut.

Where the cable passes through a bulkhead, the required water-tightness may be maintained by means of a grommet or by the use of a hollow stemmed plug through the centre line of which the means passes to be secured to the outer surface of the plug.

There will now be described an example of an anti-theft device according to the invention. It will be understood that the description, which is to be read with reference to the drawings, is given by way of example only and not by way of limitation.

In the drawings:-
Figure 1 is a fragmentary plan view of a vehicle showing an arrangement according to the present invention;
Figure 2 shows means for securing an end portion of a connecting means of the arrangement in the form of a cable;
Figure 3 shows an alternative means to that of Figure 2; and

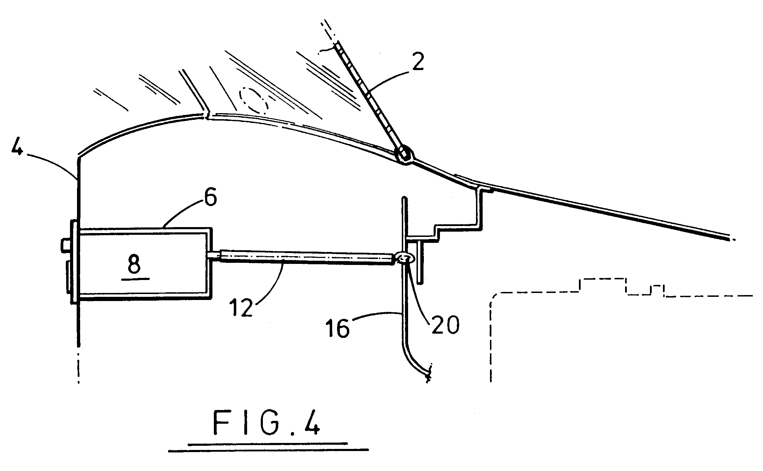

Figure 4 shows a longitudinal view in section through an installed arrangement.

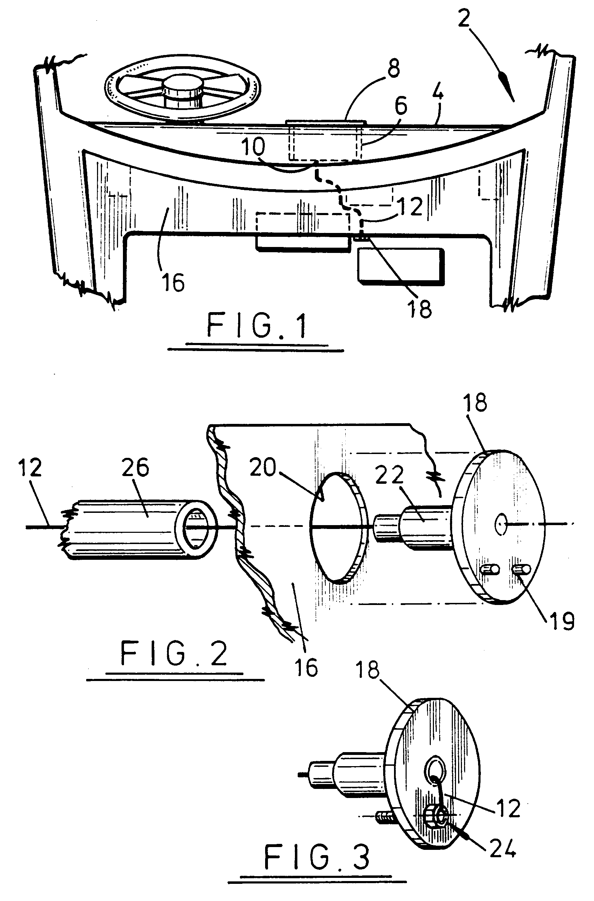

Figure 1 shows a car 2, having a fascia board (dashboard) 4 provided with a recess 6 into which is fitted a car radio/cassette player 8. Prior to installation, a first end 10 of a wire cable 12 is secured to a housing of the radio/player 8. The cable is then led through an aperture 14 drilled in the car body structure, i.e. the so-called bulkhead 16, with suitable insulation means and secured on a forward surface of the structure 16 by pulling the wire taut and securing the second end thereof in a plug 18 received in a further bulkhead aperture 20. The plug 18 provides further insulation and has a hollow stem 22 through which the cable passes and is then secured either by tying and wrapping around pins 19 (Figure 2) or by a bolt-and-nut arrangement 24 (Figure 3).

The cable 12 is received for the majority of its length within a sleeve 26 of tough plastics material. The internal diameter of the sleeve 26 is appreciably larger than the diameter of the wire 12 which is a loose fit therein (Figure 2). This hinders any attempt to saw through the cable, denying the thief's tool any grip on the cable.

Figure 2 illustrates that the stem 22 of the plug 18 may be arranged to be inserted in the open end of the sleeve 26, which then acts to prevent chafing of the wire in the aperture 20. However, the sleeve 26 also acts to protect the wire along its entire length, acting as insulation and to prevent abrasion by car parts such as windscreen wiper motors and the like conventionally disposed behind the dashboard of a vehicle and also from attempts to file or saw through the cable in the unlikely event that a thief can gain access to the bulkhead region of the vehicle.

Clearly, while the radio/player 8 is in place, access to the end 10 of the cable is virtually impossible. It is also virtually impossible to reach far enough under the fascia board 4 to be able to use a file or wire-cutter on the cable 12. If there is any risk that a thief may gain access to the engine compartment then a flange 28 may, if wished, be positioned over the plug 18 to hinder the thief further.

In order to deter a thief from attempting to steal equipment protected by an arrangement as described above, a notice may be displayed on the vehicle warning persons who might wish to break in, that it will be to no avail.

Various modifications may be made within the scope of the invention as defined in the following claims.

## Claims

1. A vehicle security anti-theft device comprising means to secure in place in vehicle fascia board or the like, audio or audio-visual equipment comprising a housing (8) enclosing components of said equipment, inextensible elongate connecting means (12) adapted to be mounted at a first end thereof to a portion of said housing spaced from a front panel thereof designed to be visible in use, said connecting means (12) being provided with mounting means (24) to permit its second, opposite, end to be secured to a body portion chassis or bulkhead (16) of a forwardly situated engine or boot compartment of the vehicle, characterised in that said connecting means (12) is received over at least part of its length with a sleeve or tube (26) of tough material adapted to withstand abrasion or other destructive action and in that the sleeve or tube (26) is a loose fit around the connecting means.

2. A device as claimed in claim 1, wherein the connecting means (12) is selected from a cable, metal wire, a rod or a linked arrangement of struts.

3. A method of securing audio or audio-visual equipment in a recess of a vehicle fascia board or the like comprising the steps of procuring a length of inextensible connecting means (12), securing a first end of the connecting means to a portion of a housing (8) of the equipment spaced from a front panel designed to be visible in use, passing the connecting means (12) in a direction rearwardly of the equipment, securing the second, opposite, end to be secured to a body portion, chassis or bulkhead (16) of the vehicle, characterized in that said connecting means (12) being received within a tough abrasion-resistant sleeve or tube (26) prior to securing in place.

4. A method according to claim 3, wherein the second end of the connecting means is mounted by means of a tying device (19).

5. A method according to either one of claims 3 or 4, wherein the second end of the connecting means is mounted by means of a bolt and nut (24).

6. A method according to any one of claims 3 to 5, wherein water-tightness and abrasion-resistance is attained by the use of plug seals (18) and grommets at regions where the connecting means passes through the vehicle bulkhead or the like.

## Patentansprüche

1. Fahrzeug-Diebstahlsicherung, die Mittel aufweist, um am Armaturenbrett oder an ähnlicher Stelle eine akustische oder audio-visuelle Anlage fest anzubringen, die folgende Elemente aufweist: ein Gehäuse (8), das Komponenten dieser Anlage umschließt, ein undehnbares langes Verbindungsmittel (12), das an seinem ersten Ende an einem Abschnitt des Gehäuses angebracht werden kann, der Abstand zu dessen Frontplatte hat, die so konstruiert ist, daß sie bei der Nutzung sichtbar ist, wobei das Verbindungsmittel (12) mit einem Befestigungsmittel (24) versehen ist, damit dessen zweites, gegenüberliegendes Ende an einem Abschnitt des Chassis oder einer Trennwand (16) eines vorn befindlichen Motors oder Kofferraumes des Fahrzeugs befestigt werden kann, dadurch gekennzeichnet, daß das Verbindungsmittel (12) wenigstens über einen Teil seiner Länge von einer Hülse oder einem Rohr (26) aus einem widerstandsfähigen Material aufgenommen wird, das geeignet ist, Abrieb oder einer anderen zerstörenden Wirkung standzuhalten, und daß die Hülse oder das Rohr (26) in loser Passung um das Verbindungsmittel angeordnet ist.

2. Vorrichtung nach Anspruch 1, bei der das Verbindungsmittel (12) aus einem Kabel, einem Metalldraht, einer Stange oder einer aneinandergefügten Anordnung von Druckstäben ausgewählt wird.

3. Verfahren zur Befestigung einer akustischen oder audio-visuellen Anlage in einer Aussparung des Armaturenbretts eines Fahrzeugs oder an ähnlicher Stelle, das die folgenden Schritte umfaßt: Bereitstellen eines Abschnitts eines undehnbaren langen Verbindungsmittels (12), Befestigen eines ersten Endes des Verbindungsmittels an einem Abschnitt eines Gehäuses (8) der Anlage, der Abstand zu einer Frontplatte hat, die so konstruiert ist, daß sie bei der Nutzung sichtbar ist, Führen des Verbindungsmittels (12) in einer Richtung von der Anlage nach hinten, Befestigen des zweiten, gegenüberliegenden Endes des Verbindungsmittels an dem Chassis oder der Trennwand (16) des Fahrzeugs, dadurch gekennzeichnet, daß das Verbindungsmittel (12) in einer widerstandsfähigen, abriebbeständigen Hülse oder Rohr (26) aufgenommen wird, bevor es an Ort und Stelle befestigt wird.

4. Verfahren nach Anspruch 3, bei dem das zweite Ende des Befestigungsmittels mit Hilfe eines Anknüpfmechanismus (19) angebracht wird.

5. Verfahren nach einem der Ansprüche 3 oder 4, bei dem das zweite Ende des Verbindungsmittels mit Hilfe einer Einheit aus Schraube und Mutter (24) angebracht wird.

6. Verfahren nach einem der Ansprüche 3 bis 5, bei dem die Wasserdichtheit und die Abriebbeständigkeit durch die Verwendung von Steckdichtungen (18) und Durchführungsdichtungen in den Bereichen erreicht werden, an denen das Verbindungsmittel durch die Fahrzeugtrennwand oder ähnliches geführt wird.

## Revendications

1. Dispositif anti vol de sécurité pour un véhicule, comprenant un moyen pour fixer sur le tableau de bord ou dans un emplacement similaire un équipement audio ou audio-visuel, comprenant un boîtier (8) englobant des composants dudit équipement, un moyen de connexion allongé inextensible (12) destiné à être monté au niveau d'une première extrémité correspondante à une partie dudit boîtier, espacée d'un panneau frontal correspondant, conçue de sorte à être visible en service, ledit moyen de connexion (12) comportant un moyen de montage (24) pour permettre la fixation de sa deuxième extrémité opposée à une partie de la carrosserie, au châssis ou à une cloison de séparation (16) d'un moteur situé à l'avant ou d'un coffre du véhicule, caractérisé en ce que ledit moyen de connexion (12) est reçu sur au moins une partie de sa longueur dans un manchon ou un tube (26) en matériau tenace, destiné à résister à l'abrasion ou à une autre action destructrice et en ce que le manchon ou le tube (26) est adapté librement autour du moyen de connexion.

2. Dispositif selon la revendication 1, dans lequel le moyen de connexion (12) est sélectionné dans le groupe constitué d'un câble, d'un fil métallique, d'une tige ou d'un agencement assemblé de barres.

3. Procédé de fixation d'un équipement audio ou audio-visuel dans un évidement d'un tableau de bord ou d'un emplacement similaire d'un véhicule comprenant les étapes de fourniture d'une longueur d'un moyen de connexion inextensible (12), de fixation d'une première extremité du moyen de connexion à une partie d'un boîtier (8) de l'équipement, espacée d'un panneau frontal, conçue de sorte à être visible en service, de passage du moyen de connexion (12) dans une direction dirigée vers l'arrière de l `équipement, de fixation de la deuxième extrémité opposée à une partie de la carrosserie, au châssis ou à une cloison de séparation (16) du véhicule, caractérisé en ce que le moyen de connexion (12) est reçu dans un manchon ou un tube en matériau tenace, résistant à l'abrasion (26), avant sa fixation en place.

4. Procédé selon la revendication 3, dans lequel la deuxième extrémité du moyen de connexion est montée par l'intermédiaire d'un dispositif d'attache (19).

5. Procédé selon l'une quelconque des revendications 3 ou 4, dans lequel la deuxième extrémité du moyen de connexion est montée par l'intermédiaire d'un boulon et d'un écrou (24).

6. Procédé selon l'une quelconque des revendications 3 à 5, dans lequel l'étanchéité à l'eau et la résistance à l'abrasion sont assurées par l'intermédiaire de l'utilisation de bouchons d'étanchéité (18) et de rondelles d'étanchéité en des régions où le moyen de connexion traverse la cloison de séparation du véhicule ou un emplacement similaire.
